# EUROPEAN PATENT APPLICATION

(11) **EP 4 344 042 A1**
(43) Date of publication of application: **27.03.2024**
(21) Application number: 22197017.1
(22) Date of filing: 22.09.2022
(51) Int. Cl.: H02M 3/335, H02M 1/34, H02M 3/155

(54) **DC-TO-DC CONVERTER WITH SNUBBER CIRCUIT**

(71) Applicant: Axis AB, 223 69 Lund (SE)
(72) Inventor: Lindstrand, Jonas, 223 69 LUND (SE)
(74) Representative: AWA Sweden AB

(57) **Abstract**

There is provided a DC-DC converter (300). The DC-DC converter (300) comprises a primary side (310) and a secondary side (350). The primary side (310) and the secondary side (350) are bridged by a transformer (340), the primary side (310) comprises a switch (320). The DC-DC converter (300) further comprises a snubber circuit (500). The snubber circuit (500) is arranged to connect the primary side (310) with the secondary side (350). The snubber circuit (500) at the primary side (310) is connected at same voltage potential as the switch (320). The snubber circuit (500) comprises a capacitor (530), a rectifier (510) and an impedance balancing unit (520).

## Description

### TECHNICAL FIELD

Embodiments presented herein relate to a DC-to-DC converter comprising a snubber circuit.

### BACKGROUND

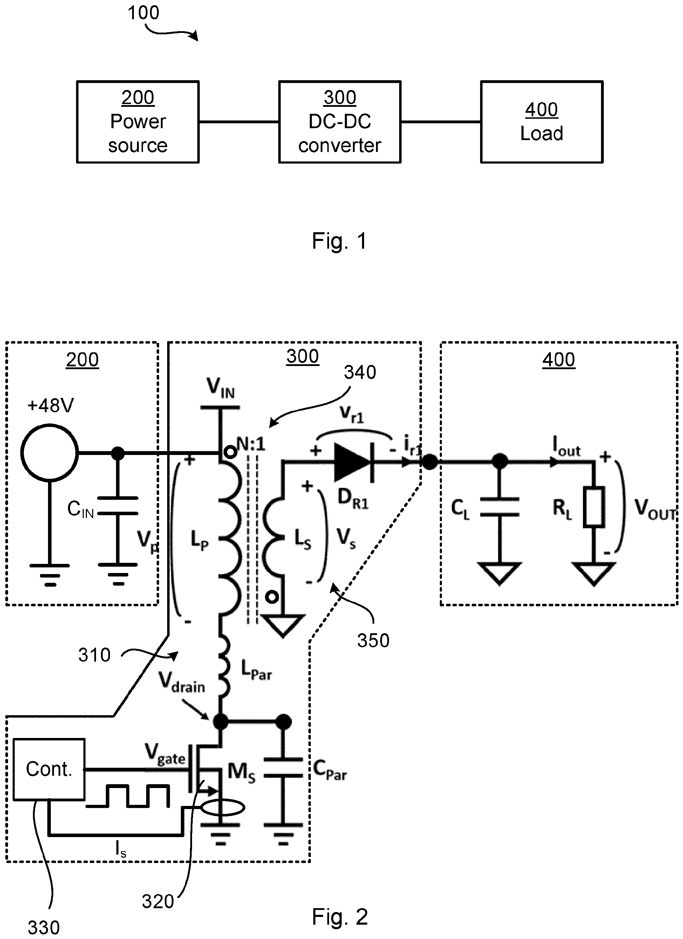

In general terms, a DC-to-DC converter, or simply DC-DC converter, is an electronic circuit, or electromechanical device, that converts a source of direct current (DC) from one voltage level to another. **Fig. 1** schematically illustrates a system 100 where power from a power source 200 is converter by a DC-DC converter 300 and provided to a load 400.

Operation of the system 100 will be briefly explained next with reference to Fig. 2. **Fig. 2** illustrates simplified schematics of a DC-DC converter 300 realized as an isolated fly-back DC-DC converter, together with simplified schematics of the power source 200 and the load 400. The power source 200 is modelled by a voltage source, providing +48 V, and a capacitor CIN. The load 400 is represented by a decoupling capacitor CL and an output load resistor RL. The main body of the DC-DC converter 300 is composed of an isolation transformer 340 with an inductor LP at the primary side and an inductor LS at the secondary side) a MOSFET transistor MS defining a switch 320, a rectifier (provided as the diode DRi), and a controller 330. LPar represents the parasitic inductance of the transformer. CPar represents the parasitic output capacitance of the switch 320.

The inductor LP at the primary side of the transformer is connected to the input DC supply voltage VIN and to the switch 320. The controller 330 is arranged to controllably cause the switch 320 to switch between an on-state and an off-state. In this respect, the gate terminal Vgate of the MOSFET transistor might be driven by a Pulse-Width-Modulated (PWM) signal, a Pulse Frequency Modulation (PFM) signal, a Pulse Density/Duration Modulation (PDM) signal, or other type of control signal, fed from the controller 330, as illustrated by the pulse train in Fig. 2. This control signal is used to set the output DC voltage VOUT to the correct voltage, by the use of negative feedback. Further, the controller 330 might comprise, or be coupled to, current sensing, as represented by the current Is, of the source current of the switch 320. In some alternatives, an explicit controller 330 is not needed, such as when the switch 320 is a self-oscillating switch, where gate-biasing is used for the control, where an inductor is connected between the Vgate and a gate-bias voltage. By using the switch 320, the voltage VP over inductor LP at the primary side is approximately equal to VIN when the switch is in the on-state and this results in a current flowing from VIN through the inductor LP and through the MOSFET transformer (from its drain terminal to its source terminal). An inverted and scaled up (by a factor N:1) version of the current at the primary side is then present at the secondary side of the transformer, i.e., through the inductor LS. The current through the inductor LS at the secondar side increases the voltage VS above the output DC voltage (VOUT) and when the voltage is larger than the turn-on (anywhere from 0.1-0.7V) voltage of the rectifier DR1, a current in flows through the rectifier to the decoupling capacitor CL, which stores the energy/voltage in the form of charges. This means that the voltage VS, during rectifier conductance is VS = VOUT + Vn. As the right amount of current, charge, or energy is supplied to the decoupling capacitor CL, the switch 320 is turned off (as controlled by the controller 330).

Because the transformer is inductive, at the moment when the switch 320 is turned off, the primary voltage VP can swing above VIN (due to the fact that an inductor is a short-circuit for DC signals). The transformer primary voltage (with the switched 320 in the off-state) can be calculated as VP = VIN + N·VS and Vdrain = VP, when ideal components are assumed. For components with parasitics, mainly leakage inductance in the transformer (LPar) and parasitic capacitance in the switch 320 (such as mainly drain to GND capacitances during the off state), might generate additional voltage ringings, or oscillations, across the switch 320; Vdrain ≥ 2·VIN+N·VS. These ringings, or oscillations, might cause reliability issues. In a worst-case situation, even breakdown of the switch 320 might be caused due to oxide-breakdown, resulting from the voltage ringings, or oscillations.

Hence, there is still a need for an improved DC-DC converter.

### SUMMARY

An object of embodiments herein is to provide a DC-DC converter that does not suffer from the above issues.

According to one aspect there is presented a DC-DC converter. The DC-DC converter comprises a primary side and a secondary side. The primary side and the secondary side are bridged by a transformer. The primary side comprises a switch. The DC-DC converter further comprises a snubber circuit. The snubber circuit is arranged to connect the primary side with the secondary side. The snubber circuit at the primary side is connected at the same voltage potential as the switch. The snubber circuit comprises a capacitor, a rectifier and an impedance balancing unit.

Advantageously, the snubber circuit can be used with existing DC-DC converters to boost the performance but without requiring any additional design changes to the DC-DC converters.

Advantageously, the disclosed DC-DC converter provides increased reliability, output power, and efficiency, without increasing the cost per unit of power. As an example, with the disclosed configuration, a DC-DC converter for POE class 3 can, by provision of the snubber circuit, be upgraded to POE class 4 without any further change of components.

Advantageously, the disclosed DC-DC converter increases the output power without the need for more expensive components whilst reducing the stress of the components, due to heat and voltage overshoots.

Advantageously, due to the fact that current, or charge, is delivered to the output of the DC-DC converter during each half-period, less output capacitance is required (thus lowering cost) and also no freewheel half-period for driving the load is present. In turn, this means that no energy, or power, is burnt off without delivering power to the load.

Advantageously, the resistance used to attenuate the parasitic ringings, or oscillations, is the output load of the DC-DC converter and this also means that the snubber circuit can be adapted to the required output power.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 schematically illustrates a system where power from a power source is converter by a DC-DC converter and provided to a load according to an example;
Fig. 2 provides schematics of a DC-DC converter, a power source, and a load according to an example;
Figs. 3, 4, and 5 provides schematics of a DC-DC converter, a power source, and a load according to embodiments;
Figs. 6, 7, 8, 9, 10, and 11 schematically illustrate examples of impedance balancing units according to embodiments;
Fig. 12 schematically illustrates a DC-DC converter and voltage- and current-waveforms according to an embodiment; and
Fig. 13 schematically illustrates examples of a rectifier according to embodiments.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any feature illustrated by dashed lines should be regarded as optional.

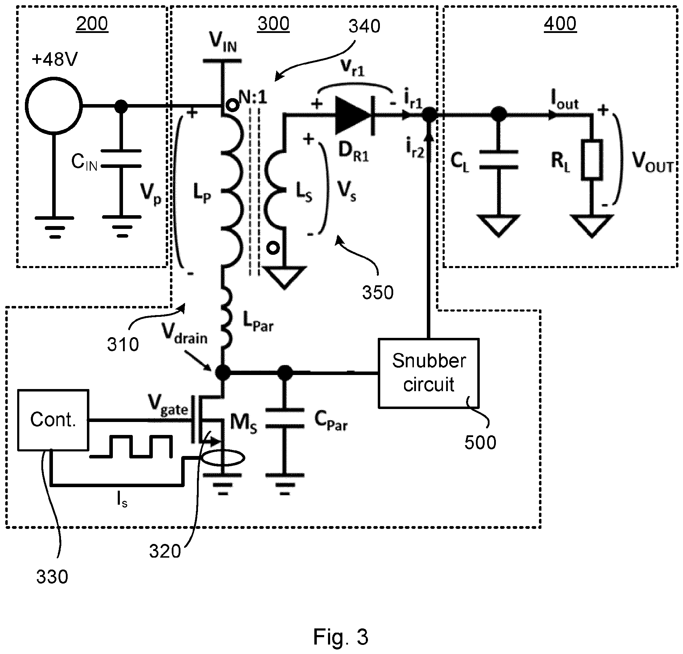

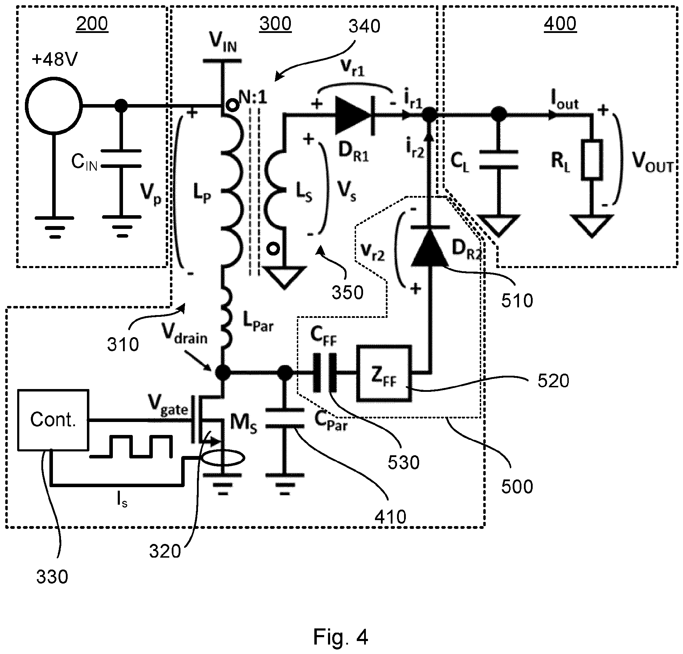

Reference is next made to **Fig. 3** which shows a system where power from a power source 200 is converter by a DC-DC converter 300 and provided to a power consuming load 400 according to an embodiment. In some non-limiting examples, the power consuming load 400 is any, or any combination of: a camera, an audio equipment, a power over Ethernet (PoE) powered device. Some of the components are the same as in the system in Fig. 2. Hence, the DC-DC converter 300 comprises a primary side 310 and a secondary side 350. The primary side 310 and the secondary side 350 are bridged by a transformer 340. The primary side 310 comprises a switch 320. The secondary side 350 is electrically couplable to the power consuming load 400. The DC-DC converter 300 further comprises a snubber circuit 500. The snubber circuit 500 is arranged to connect the primary side 310 with the secondary side 350. According to Fig. 3, the snubber circuit 500 is connected between the drain terminal of the MOSFET transistor (representing the switch 320) at the primary side 310 and after the diode DR1 at the secondary side 350. That is, in some examples, the switch 320 is a MOSFET transistor having a gate terminal, a drain terminal, and a source terminal. The snubber circuit 500 is then connected at the drain terminal of the MOSFET transistor. Further, the switch 320 might instead be an IGBT transistor having a gate terminal, a collector terminal, and an emitter terminal. The snubber circuit 500 is then connected at the collector terminal of the IGBT transistor. The snubber circuit 500 at the primary side 310 is connected at same voltage potential as the switch 320. As will be disclosed in more detail below with reference to Fig. 4, the snubber circuit 500 comprises a capacitor 530, a rectifier 510 and an impedance balancing unit 520. The rectifier 510 might be a diode or an actively controlled switching element.

The snubber circuit 500 thus adds an additional feed-forward path from the primary side to the secondary side of the transformer. By adding such an additional feed-forward path, an additional current ir2 is added to the load, increasing the output power, whereby power/energy from ringings, or oscillations, related to parasitic inductance and capacitance are also included in the current ir2. In particular, in some embodiments, the snubber circuit 500 is arranged to convert oscillations resulting from opening of the switch 320 to a current for driving the power consuming load 400. This increases reliability, output power, and power-efficiency of the DC-DC converter in a cost-effective way, without the need of special components (which could be expensive).

The herein disclosed arrangement of the snubber circuit in the DC-DC converter can hence be used to enhance the power efficiency of a traditional isolated DC-DC converter in a fly-back configuration, by converting unwanted parasitic ringings, or oscillations, due to component parasitics, to wanted load current. This improves reliability, whilst reducing the power losses associated with Resistor-Capacitor (RC) or Resistor-Capacitor-Diode (RCD) snubber circuits and at the same time increasing the output power of the DC-DC converter.

The arrangement of the snubber circuit in the DC-DC converter is used to mitigate ringings, or oscillations, by feeding the energy to the output load (as represented by the capacitor CL and the resistor RL). In addition, the snubber circuit can be used to supply charge, or energy, to the output of the DC-DC converter when the switch 320 is in the off-state. That is, the switch 320 is switchable between an on-state and an off-state. In the on-state a current is enabled to flow through the primary side 310 for the primary side 310 to transfer electrical energy to the secondary side 350. In the off-state the current is prevented from flowing through the primary side 310. In the off-state the snubber circuit 500 provides current to the power consuming load 400 at the secondary side 350. In further detail, in the off-state the current will not flow through the primary side, but the current will still flow through the primary inductance (LP) to the parasitic output capacitance CPar of the switch.

A controller 330 is arranged to periodically switch the switch 320 between the on-state and the off-state. A feedback path might be provided from the secondary side 350 to the controller 330. The feedback path might be realized as an optical connection, in contrast to an electrical connection, between the secondary side 350 and the controller 330.

That the snubber circuit can be used to supply charge, or energy, to the output of the DC-DC converter when the switch 320 is in the off-state means that the maximum output power of the DC-DC converter can be doubled, mainly because the same amount of power is delivered throughout the whole waveform period (instead of during a half-period of the signal provided by the controller 330).

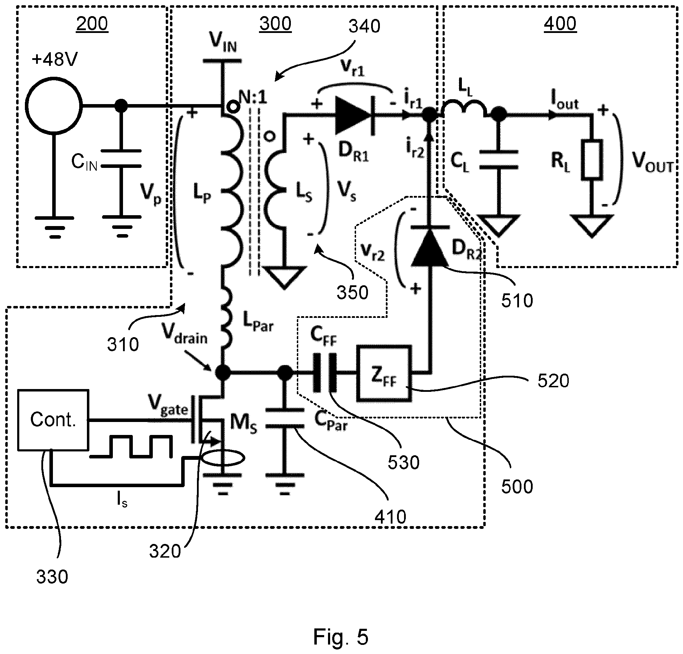

With reference next being made to **Fig. 4**, which illustrates a DC-DC converter 300 in terms of a fly-back converter according to an embodiment. The snubber circuit 500 comprises an impedance balancing unit 520 (denoted ZFF), connected between a high-voltage capacitor CFF and a secondary rectifier DR2. An additional isolation barrier from the primary side 310 to the secondary side 350 of the DC-DC converter 300 is generated by the capacitor CFF. Together with the impedance balancing unit 520, a voltage-divider with impedance transformation is created. This type of circuit can be used to transform a low impedance in to a high one, exactly like the transformer). In some embodiments, characteristics of the capacitor 530, the rectifier 510, and the impedance balancing unit 520 are adaptively settable as a function of required power of the power consuming load 400. **Fig. 5** shows the same circuit as in Fig. 4 but where the DC-DC converter 300 is a fly-forward converter and where an additional inductance (LL) has been added in series with the diode DR1.

In some examples, the impedance balancing unit 520 comprises an impedance transformation network, or an impedance matching network. In some examples, the impedance balancing unit 520 is composed of at least one of: a resistor, an inductor, a capacitor, a transformer. In some examples the resistor, the inductor and the capacitor form a resistor-inductor-capacitor (RLC) circuit. Still further, the impedance balancing unit might comprise one inductor or multiple inductors, one capacitor or multiple capacitors, or one inductor together with one capacitor, or multiple inductors together with multiple capacitors, etc. For the resistor part, resistance is a part of all real components, but can also be used to balance the loading of Vdrain or to generate high impedance paths to signal ground, for instance. The impedance balancing unit 520 might in some examples comprise of inductors and capacitors, connected as either a L-,T-, or π-network or a combination thereof.

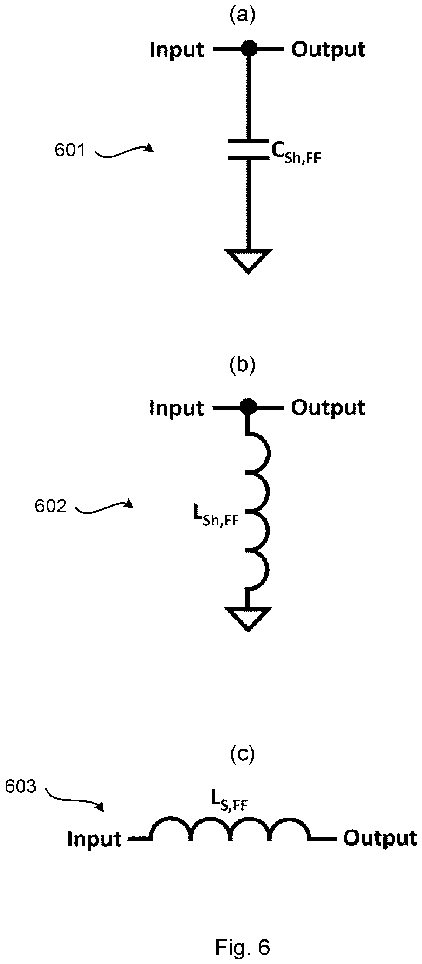

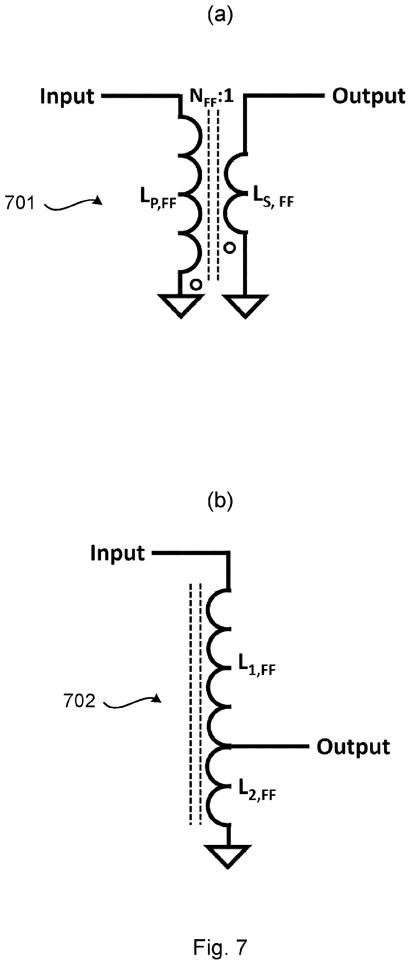

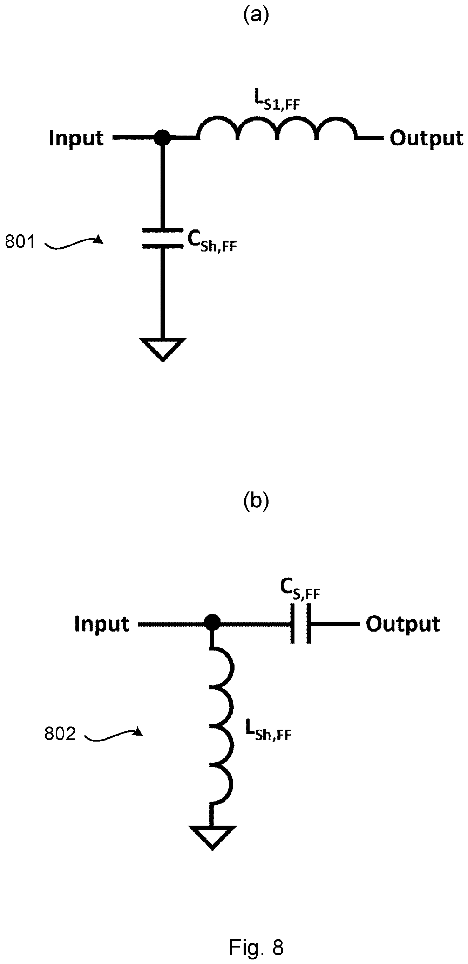

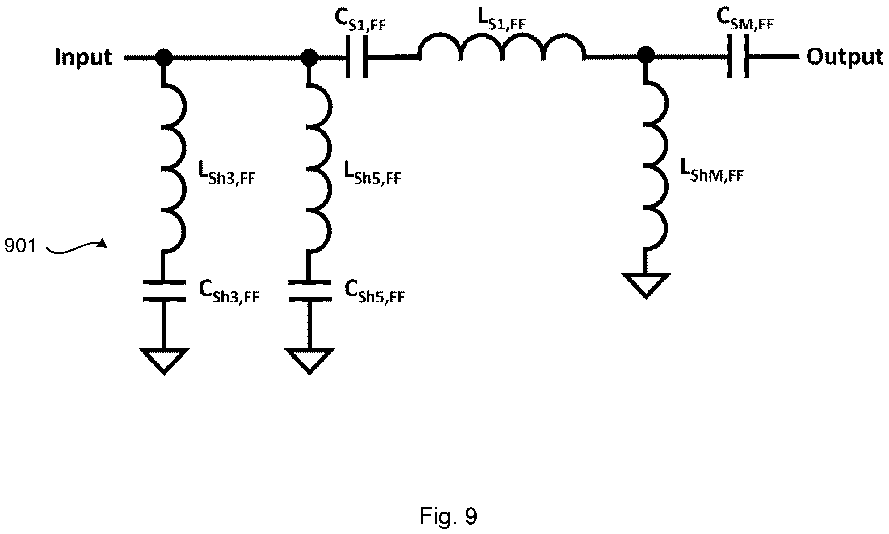

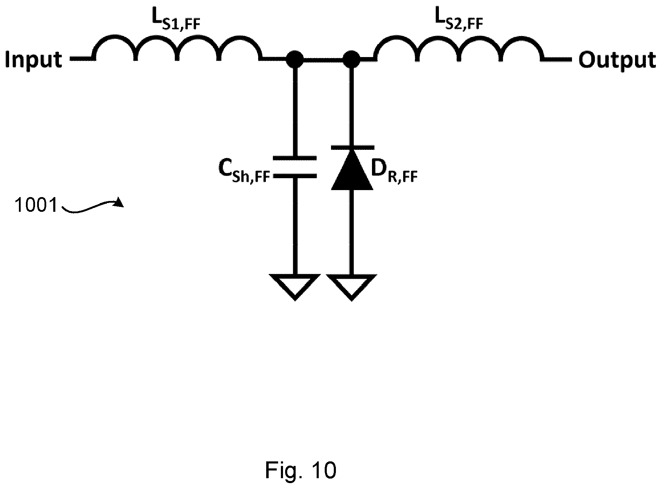

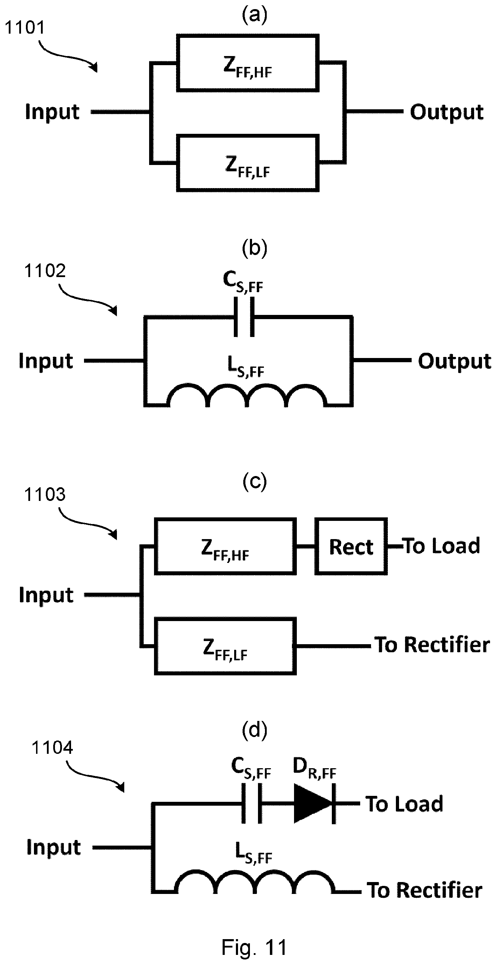

Some examples of implementations of the impedance balancing unit can be found in Figs. 6 to Fig. 11. In **Fig. 6** is illustrated three examples of impedance balancing units realized as a shunt capacitor 601 (Fig. 6(a)), a shunt inductor 602 (Fig. 6(b)), and a series inductor 603 (Fig. 6(c)). In **Fig. 7** is illustrated two examples of transformer impedance balancing units realized as an isolated transformer 701 (Fig. 7(a)), and a non-isolated autotransformer 702 (Fig. 7(b)). In **Fig. 8** is illustrated two examples of LC-filter based impedance balancing units realized as a low-pass impedance balancing unit 801 (Fig. 8(a)), and a high-pass impedance balancing unit 802 (Fig. 8(b)). The filters are used to transform the low impedance of the power consuming load 400 to a higher impedance. In **Fig. 9** is illustrated an example of a harmonic resonance-based impedance balancing unit 901 with impedance matching; values of LSh3,FF and CSh3,FF are selected to resonate at the third harmonic (giving a low impedance Z≈oΩ), whereas values of LSh5,FF and CSh5,FF are selected to resonate at the fifth harmonic (giving a low impedance Z≈oΩ). This tunes the current into a square-wave, which gives less voltage to current overlap in the switch. The multiple resonators can be used to shape voltage-and current-waveforms, and this shaping can be used to reduce the voltage and current overlap at the drain of the switch. In **Fig. 10** is illustrated an example of a T-match impedance balancing unit 1001 with a shunt diode rectifier. In **Fig. 11** are illustrated four examples of multipath impedance balancing units, where Z_{FF,HF} is for mitigating ringings, or oscillations, and Z_{FF,LF} is for adjusting power. In Fig. 11(a) is shown a general block diagram 1101, Fig. 11(b) shows a realization 1102 of the block diagram in Fig. 11(a) with one capacitor and one inductor in parallel, Fig. 11(c) shows a block diagram 1103 of a split path system, and Fig. 11(d) shows a realization 1104 of the block diagram in Fig. 11(c) with one capacitor and a diode in series, and one inductor. According to Fig. 11(c) and Fig. 11(d), the impedance balancing unit and rectifiers are split into a high frequency part (such as to operate in the range of 10-50MHz) for the ringings, or oscillations, and a low frequency part (such as to operate in the range of 100kHz-10MHz, matching the operating frequency of the switch) to boost the output power of the converter, whilst feeding the current to the power consuming load 400. The rectifiers (one for Z_{FF,HF} and one for Z_{FF,LF}) can also be optimized for operation at different power requirements and with different tolerances. The switch/rectifier of the low frequency network can be controlled to only deliver current when the DC-DC converter 300 cannot deliver more current. This requires more control of the rectifier of the low frequency circuitry, therefore an increase in overall circuit complexity, due to the large degrees of freedom.

Additional functionality can be implemented in the impedance balancing unit 520 and/or the secondary rectifier DR2. One non-limiting example of such functionality is to implement an output power threshold, which enables, or increases, the power transfer from the snubber circuit 500 when the delivery of more power to the load 400 is needed. This gives a larger power range with good efficiency of the DC-DC converter and also increases the output power.

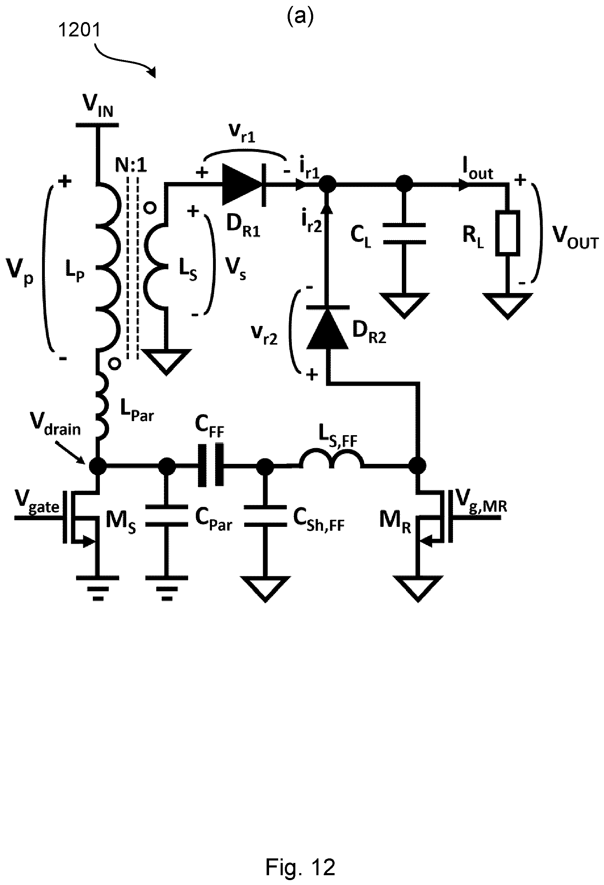

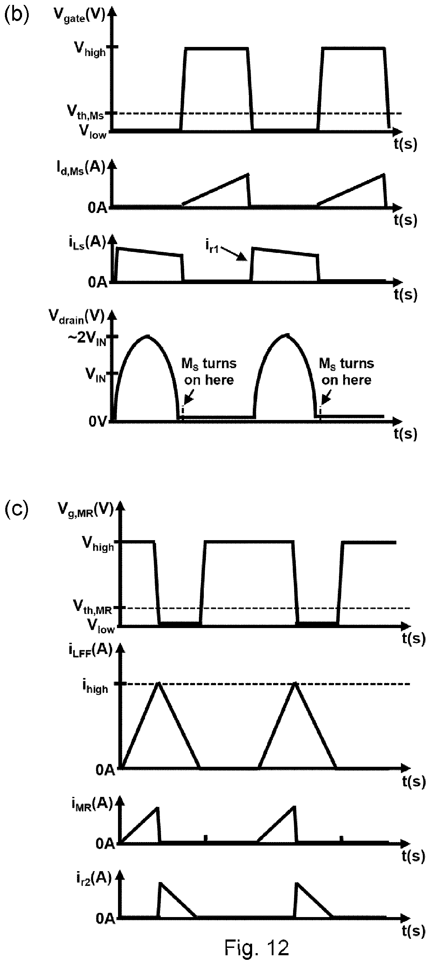

Aspects of Zero Voltage Switching (ZVS) will be disclosed next with reference to the circuit scheme 1201 in **Fig. 12****.** ZVS can be achieved by tuning the impedance balancing unit together with C_{FF} and to control the ZVS by controlling when the rectifier is turned on. The snubber circuit 500 comprises a further capacitor CSh,FF placed in parallel with the switch 320. The tuning of Z_{FF} and C_{FF} sets the amount of loading at V_{drain} and the controlling of the rectifier sets when the loading of V_{drain} occurs. Fig. 12(a) shows an example of a fly-back DC-DC converter with a snubber circuit arranged for ZVS. Examples of voltage- and current-waveforms of this fly-back DC-DC converter are shown in Fig. 12(b) and Fig. 12(c).

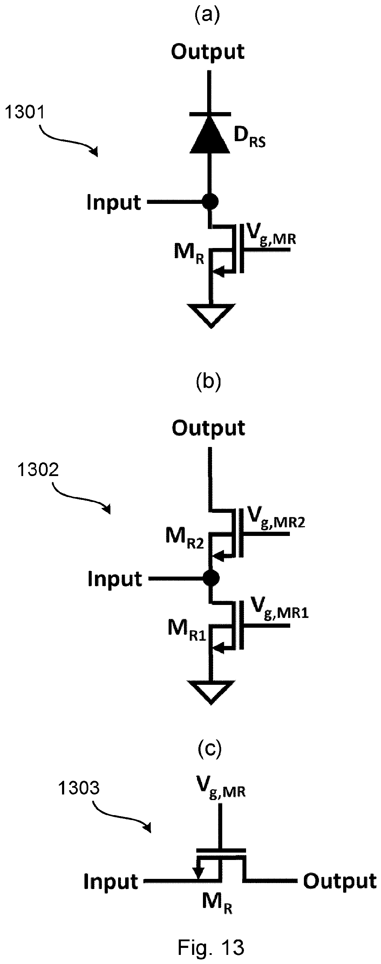

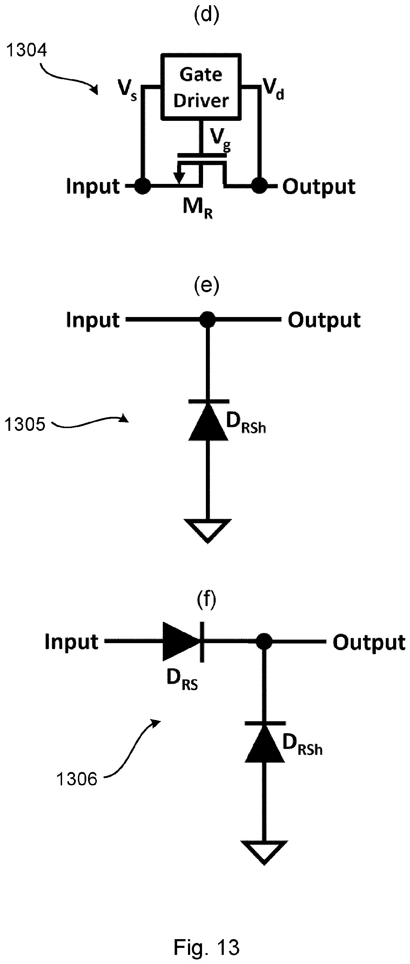

In **Fig. 13** is illustrated six different examples of the rectifier 510. Fig. 13(a) shows a rectifier 1301 realized by a diode in series and a shunt switch. Fig. 13(b) shows a rectifier 1302 realized by a switch in series together with a shunt switch. Fig. 13(c) shows a general series MOSFET switch rectifier 1303 (which could be realized either using a NMOS transistor or a PMOS transistor). Fig. 13(d) shows an active rectifier 1304 with a MOSFET switch and a gate driver controller. The voltage Vs supplies the gate driver with supply voltage and senses when to turn on the transistor MR in relation to the voltage terminal Vd (connected to the power consuming load 400), where Vg is the terminal that drives the gate of the transistor MR. Fig. 13(e) shows a shunt diode rectifier 1305. Finally, Fig. 13(f) shows a series diode rectifier with a shunt diode rectifier 1306.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A direct current to direct current, DC-DC, converter (300), the DC-DC converter (300) comprising:
a primary side (310) and a secondary side (350), the primary side (310) and the secondary side (350) being bridged by a transformer (340), the primary side (310) comprising a switch (320); and
a snubber circuit (500),
wherein the snubber circuit (500) is arranged to connect the primary side (310) with the secondary side (350),
wherein the snubber circuit (500) at the primary side (310) is connected at same voltage potential as the switch (320), and
wherein the snubber circuit (500) comprises a capacitor (530), a rectifier (510) and an impedance balancing unit (520).

2. The DC-DC converter (300) according to claim 1, wherein the impedance balancing unit (520) comprises an impedance transformation, or impedance matching, network.

3. The DC-DC converter (300) according to claim 2, wherein the impedance balancing unit (520) is composed of at least one of: a resistor, an inductor, a capacitor, a transformer.

4. The DC-DC converter (300) according to any preceding claim, wherein the secondary side (350) is electrically couplable to a power consuming load (400), and wherein the snubber circuit (500) is arranged to convert oscillations resulting from opening of the switch (320) to a current for driving the power consuming load (400).

5. The DC-DC converter (300) according to claim 4, wherein characteristics of the capacitor (530), the rectifier (510), and the impedance balancing unit (520) are adaptively settable as a function of required power of the power consuming load (400).

6. The DC-DC converter (300) according to claim 4 or 5, wherein the power consuming load (400) is any, or any combination of: a camera, an audio equipment, a power over Ethernet powered device.

7. The DC-DC converter (300) according to claim 4, 5 or 6, wherein the switch (320) is switchable between an on-state and an off-state, wherein in the on-state a current is enabled to flow through the primary side (310) for the primary side (310) to transfer electrical energy to the secondary side (350) and in the off-state the current is prevented from flowing through the primary side (310), and wherein in the off-state the snubber circuit (500) provides current to the power consuming load (400) at the secondary side (350).

8. The DC-DC converter (300) according to claim 7, further comprising:
a controller (330) arranged to periodically switch the switch (320) between the on-state and the off-state.

9. The DC-DC converter (300) according to claim 8, further comprising a feedback path from the secondary side (350) to the controller (330).

10. The DC-DC converter (300) according to any preceding claim, wherein the snubber circuit (500) comprises a further capacitor (CSh,FF) placed in parallel with the switch (320).

11. The DC-DC converter (300) according to any preceding claim, wherein the rectifier (510) is a diode or an actively controlled switching element.

12. The DC-DC converter (300) according to any preceding claim, wherein the switch (320) is a MOSFET transistor having a gate terminal, a drain terminal, and a source terminal, and wherein the snubber circuit (500) is connected at the drain terminal of the MOSFET transistor, or wherein the switch (320) is an IGBT transistor having a gate terminal, a collector terminal, and an emitter terminal, and wherein the snubber circuit (500) is connected at the collector terminal of the IGBT transistor.

13. The DC-DC converter (300) according to any preceding claim, wherein the DC-DC converter (300) is any of: a fly-back converter, a fly-forward converter.

## Amended claims

### Amended claims in accordance with Rule 137(2) EPC.

1. A system comprising a direct current to direct current, DC-DC, converter (300) and a power consuming load (400), the DC-DC converter (300) comprising:
a primary side (310) and a secondary side (350), wherein the secondary side (350) is electrically couplable to the power consuming load (400), and wherein the snubber circuit (500) is arranged to convert oscillations resulting from opening of the switch (320) to a current for driving the power consuming load (400), and wherein the power consuming load (400) is any, or any combination of: a camera, an audio equipment, a power over Ethernet powered device, the primary side (310) and the secondary side (350) being bridged by a transformer (340), the primary side (310) comprising a switch (320); and
a snubber circuit (500),
wherein the snubber circuit (500) is arranged to connect the primary side (310) with the secondary side (350),
wherein the snubber circuit (500) at the primary side (310) is connected at same voltage potential as the switch (320), and
wherein the snubber circuit (500) comprises a capacitor (530), a rectifier (510) and an impedance balancing unit (520).

2. The system according to claim 1, wherein the impedance balancing unit (520) comprises an impedance transformation, or impedance matching, network.

3. The system according to claim 2, wherein the impedance balancing unit (520) is composed of at least one of: a resistor, an inductor, a capacitor, a transformer.

4. The system according to claim 1, wherein characteristics of the capacitor (530), the rectifier (510), and the impedance balancing unit (520) are adaptively settable as a function of required power of the power consuming load (400).

5. The system according to claim 1 or 4, wherein the switch (320) is switchable between an on-state and an off-state, wherein in the on-state a current is enabled to flow through the primary side (310) for the primary side (310) to transfer electrical energy to the secondary side (350) and in the off-state the current is prevented from flowing through the primary side (310), and wherein in the off-state the snubber circuit (500) provides current to the power consuming load (400) at the secondary side (350).

6. The system according to claim 5, the DC-DC converter further comprising:
a controller (330) arranged to periodically switch the switch (320) between the on-state and the off-state.

7. system according to claim 6, further comprising a feedback path from the secondary side (350) to the controller (330).

8. The system according to any preceding claim, wherein the snubber circuit (500) comprises a further capacitor (CSh,FF) placed in parallel with the switch (320).

9. The system according to any preceding claim, wherein the rectifier (510) is a diode or an actively controlled switching element.

10. The system according to any preceding claim, wherein the switch (320) is a MOSFET transistor having a gate terminal, a drain terminal, and a source terminal, and wherein the snubber circuit (500) is connected at the drain terminal of the MOSFET transistor, or wherein the switch (320) is an IGBT transistor having a gate terminal, a collector terminal, and an emitter terminal, and wherein the snubber circuit (500) is connected at the collector terminal of the IGBT transistor.

11. The system according to any preceding claim, wherein the DC-DC converter (300) is any of: a fly-back converter, a fly-forward converter.
